# EUROPÄISCHE PATENTSCHRIFT

(11) **EP 1 984 607 B1**
(45) Veröffentlichungstag und Bekanntmachung des Hinweises auf die Patenterteilung: **11.08.2010**
(21) Anmeldenummer: 07722789.0
(22) Anmeldetag: 07.02.2007
(51) Int. Cl.: F01N 3/28

(54) **KATALYSATOR MIT VERBESSERTEM ANSPRINGVERHALTEN**
CATALYTIC CONVERTER WITH IMPROVED START-UP BEHAVIOUR
CATALYSEUR PRÉSENTANT UN MEILLEUR COMPORTEMENT AU DÉMARRAGE

(30) Priorität: 07.02.2006 DE 102006005788
(43) Veröffentlichungstag der Anmeldung: 29.10.2008
(73) Patentinhaber: Umicore AG & Co. KG, 63457 Hanau-Wolfgang (DE)
(72) Erfinder: QUELL, Juergen, 63457 Hanau-Großauheim (DE)
(86) Internationale Anmeldenummer: PCT/EP2007/001023
(87) Internationale Veröffentlichungsnummer: WO 2007/090618

(56) Entgegenhaltungen:
- EP-A1- 0 705 962
- WO-A-2004/022937
- JP-A- 5 309 277
- US-A- 5 648 050
- US-A- 5 821 194

## Beschreibung

Die vorliegende Erfindung befaßt sich mit metallischen Wabenkörpern als Träger für eine Beschichtung aus Katalysatormaterial für die Abgasreinigung von Verbrennungsmotoren.

Von den Wabenkörpern wird einerseits eine große geometrische Oberfläche für die Aufnahme der Beschichtung und andererseits eine geringe Wärmekapazität gewünscht, damit sich der Wabenkörper schnell auf die Betriebstemperatur des Katalysators aufwärmt. Daneben wird von den Wabenkörpern eine ausreichende mechanische Stabilität gefordert, um den mechanischen Belastungen durch die pulsierende Gasströmung und die Vibrationen von Motor und Fahrzeug zu widerstehen. Außerdem muß das Material der Wabenkörper beständig sein gegenüber der korrosiven Abgasatmosphäre bei hohen Temperaturen.

Die katalytische Beschichtung eines fertigen Katalysators besteht aus feinteiligen temperaturbeständigen Metalloxiden, auf deren Oberfläche katalytisch aktive Platingruppenmetalle abgeschieden sind. Geeignete Metalloxide sind zum Beispiel Aluminiumoxid, Titanoxid, Siliziumoxid, Ceroxid, Zirkonoxid, Zeolithe und Mischungen oder Mischoxide davon sowie Stabilisatoren wie Lanthanoxid und Bariumoxid. Zur Aufbringung dieser Materialien auf den Wabenkörper werden die pulverförmigen Materialien zum Beispiel in Wasser suspendiert. Anschließend wird diese Beschichtungssuspension mit bekannten Verfahren auf den Wabenkörpern abgeschieden, getrocknet und durch Kalzinieren verfestigt.

Die Wabenkörper können unterschiedlich aufgebaut sein. Schon sehr frühzeitig wurden spiralig gewickelte Wabenkörper verwendet. Sie bestehen aus einer glatten und einer gewellten Blechlage, die aufeinandergelegt und dann spiralig aufgewickelt und in ein Mantelrohr eingesetzt werden. Durch die beiden Blechlagen werden Kanäle gebildet, durch die das Abgas strömen und intensiv mit der katalytischen Beschichtung in Kontakt treten kann.

Bei einer anderen Bauform wird der Wabenkörper aus einer Vielzahl von abwechselnd angeordneten glatten und gewellten oder unterschiedlich gewellten Blechlagen aufgebaut, wobei die Blechlagen zunächst einen oder mehrere Stapel bilden, die miteinander verschlungen werden. Die Enden der Blechlagen kommen dabei außen zu liegen und können mit einem Mantelrohr verbunden werden. Dadurch entstehen viele Verbindungen zwischen Blechlagen und Mantelrohr, die die mechanische Festigkeit des, Wabenkörpers erhöhen.

Als Material für die Blechlagen werden bevorzugt aluminiumhaltige Stahllegierungen eingesetzt, die zum Beispiel unter dem Handelsname FeCrAlloy® vermarktet werden. Hierbei handelt es sich um eine Eisen-Chrom-Aluminium-Legierung. Die Dicke der Blechlagen beträgt gewöhnlich zwischen 20 und 80 µm, bevorzugt 50 µm.

Es ist seit langem bekannt, die Blechlagen mit Lochungen und Sicken zu versehen, um die Strömung in den Kanälen zu beeinflussen und/oder eine Quervermischung zwischen den einzelnen Strömungskanälen zu erreichen. Es ist ebenfalls bekannt, geschlitzte Bleche für den Aufbau von metallischen Wabenkörpern einzusetzen. Die US 5,599,509 schlägt zum Beispiel vor, die Bleche im Eingangsbereich des Wabenkörpers mit Schlitzen quer zur Strömungsrichtung des Abgases auszustatten, um die Wärmekapazität des Wabenkörpers in diesem Bereich gezielt zu vermindern.

Durch die verminderte Wärmeleitfähigkeit und Wärmekapazität im vorderen Teil erreicht die aufgebrachte Katalysatorbeschichtung schneller ihre Anspringtemperatur und damit auch einen besseren Umsatz zum Beispiel für Kohlenmonoxid und Kohlenwasserstoffe. Allerdings hängt die Verbesserung des Umsatzes deutlich von der prozentualen Schlitzfläche der Blechlagen ab. Der Umsatz verbessert sich nur in einem Bereich der Schlitzflächen zwischen 20 und 50 %. Oberhalb von 50 % nimmt der Kohlenwasserstoffumsatz wieder ab, weil mit zunehmender Schlitzfläche bei gleichbleibender Dicke der Katalysatorschicht die zur Verfügung stehende Katalysatormasse abnimmt. Die Verbesserungen des Umsatzes sind daher nur in der Aufwärmphase zu beobachten. Nach der Aufwärmphase führt die verminderte Katalysatormasse zu einem verschlechterten Umsatz der Schadstoffe im Abgas. Außerdem besitzt ein solcher Katalysator wegen der geringen Katalysatormasse eine geringe Alterungsbeständigkeit. Weiterhin erhöht die Lochung der Blechlagen den Staudruck des Katalysators, da sich an den Löchern Turbulenzen bilden. Wollte man auf einen solchen Katalysatorträger dieselbe Katalysatormasse aufbringen wie bei einem ungelochten Träger mit gleicher Geometrie, so würde sich zwangsläufig die Schichtdicke der Katalysatorschicht und damit ebenfalls der Staudruck des Katalysators erhöhen.

Die DE 103 14 085 A1 beschreibt ebenfalls metallische Wabenkörper aus zumindest teilweise gelochten Blechlagen. Ziel der Lochungen ist es, eine Quervermischung der Abgasströme verschiedener Strömungskanäle zu ermöglichen. Bei der Beschichtung wird daher darauf geachtet, daß die Löcher nicht durch die Beschichtungssuspension verschlossen werden. Aus diesem Grund werden die Wabenkörper in einer Vibrationsanlage beschichtet, die eine Relativbewegung zwischen der Beschichtungssuspension und dem Trägerkörper erzeugt und somit ein Verschließen der Löcher verhindert.

Die US 5,821,194 beschreibt einen metallischen Wabenkörper aus glatten und gewellten Blechlagen. Zur Verbesserung der Haftung einer Vorbeschichtungsmasse sind die Blechlagen mit einer Vielzahl von Löchern ausgestattet, in die die Vorbeschichtungsmasse bei der Beschichtung eindringt und eine mechanische Verankerung zwischen Blechlagen und Beschichtungsmasse bildet. Der Durchmesser der Löcher ist zu diesem Zweck etwa halb so groß wie die Dicke der Blechlagen und beträgt somit 25 bis 35 µm. Die Löcher sind in einem Abstand von etwa 1 mm zueinander angeordnet.

Die vorliegende Erfindung soll die aus dem Stand der Technik bekannten Nachteile von gelochten Blechlagen vermeiden. Es ist Aufgabe der Erfindung, den Verlust der Trägeroberfläche durch die Lochfläche der Blechlagen durch geeignete Maßnahmen zu kompensieren.

Diese Aufgabe wird gelöst durch einen Katalysator für die Reinigung der Abgase von Verbrennungsmotoren, der einen Wabenkörper aus glatten und gewellten Metallblechen mit einer Eintrittsstimfläche und einer Austrittstimfläche für die Abgase enthält, wobei die Metallbleche zur Verminderung ihrer Wärmekapazität mit Löchern und/oder Schlitzen versehen sind und auf den Metallblechen eine Katalysatormasse aufgebracht ist. Der Katalysator zeichnet sich dadurch aus, daß die Löcher und/oder Schlitze der Metallbleche möglichst vollständig mit Katalysatormasse ausgefüllt sind und die Lochfläche aller Löcher zusammen 5 bis 80 % der Fläche der Metallbleche beträgt.

Im Unterschied zu der US 5,599,509 werden die Löcher und Schlitze in den Blechlagen gemäß der vorliegenden Erfindung mit Katalysatormasse ausgefüllt. Das Ausfüllen mit Katalysatormasse oder mit einer Vorbeschichtung erfolgt direkt beim Beschichtungsvorgang; es sind keine zusätzlichen Arbeitsgänge erforderlich. Wird die gleiche Menge an Katalysatormasse verwendet, wie sie bei Trägem ohne Lochung mit gleicher Geometrie Anwendung findet, ist die Wärmekapazität um den Anteil der Lochung in den Blechlagen verringert. Zur Abschätzung dieser Effekte können die physikalischen Daten in Tabelle 1 dienen:

**Tabelle 1: Physikalische Daten von FeCrAlloy und Katalysatorschicht aus Aluminiumoxid im Vergleich**

| Eigenschaft | | FeCrAlloy | Katalysatorschicht |
|---|---|---|---|
| Dichte | g/dm³ | 7,28 | 1,2 - 1,6 |
| Spez. Wärmekapazität | J/(kg · K) | 480 | 750 - 950 |
| Wärmeleitfähigkeit | W/(m · K) | 16 | 1,4 |

Der Vorteil gemäß der Erfindung besteht darin, daß die Lochung der Blechlagen nicht zu einer Verminderung der Katalysatormasse führt. Als Folge davon erreicht der erfindungsgemäße Katalysator durch die verringerte Wärmekapazität des Trägers sehr schnell seine Anspringtemperatur und entfaltet dann die volle Aktivität der ungeschmälerten Katalysatorbeschichtung. Darüber hinaus weist der erfindungsgemäße Katalysator infolge der höheren Beladungskonzentration mit Katalysatormasse eine verbesserte Alterungsstabilität gegenüber herkömmlichen, gelochten Katalysatoren auf.

Natürlich wäre es auch möglich, dieselbe Beschichtungskonzentration gemäß dem Stand der Technik ohne Verschließen der Löcher auf den Wabenkörper aufzubringen. Die Beschichtungsdicke wäre dann aber zwangsläufig wesentlich größer und würde somit zu einem höheren Strömungswiderstand des Katalysators führen.

Zur Herstellung des erfindungsgemäßen Katalysators müssen die Eigenschaften der Beschichtungssuspension an die Lochausdehnungen angepaßt werden, um eine vollständige Ausfüllung möglichst aller Löcher mit Katalysatormasse zu gewährleisten. Dünnflüssige Beschichtungssuspensionen können nur kleine Löcher verschließen; dickflüssige Beschichtungssuspensionen überdecken dagegen auch größere Löcher. Der Fachmann kann die optimalen Bedingungen durch einige Vorversuche leicht ermitteln.

Die Form der Löcher muß nicht kreisförmig sein. Die mit der Beschichtungssuspension überdeckbare Lochfläche ist von der Form der Löcher und den Eigenschaften der Beschichtungssuspension abhängig. Generell kann die Fläche der einzelnen Löcher 0,1 bis 25 mm² betragen. Bei kreisförmigen Löchern hat sich eine Lochfläche von 0,1 bis zu 1 mm² bewährt; bei länglichen Löchern kann die Lochfläche dagegen zwischen 0,25 und 25, bevorzugt zwischen 0,25 und 5 mm², gewählt werden. Die Löcher können daher im Rahmen der genannten Beschränkungen rund, elliptisch, oval, quadratisch, rechteckig, schlitzförmig oder vieleckig sein.

Wenn die obigen Vorgaben bezüglich der Eigenschaften der Beschichtungssuspension und der Löcherabmessungen beachtet werden, können für den eigentlichen Beschichtungsvorgang die bekannten Beschichtungsverfahren durch Tauchen, Übergießen, Einsaugen oder Einpumpen angewendet werden. Bei der Entfernung überschüssiger Beschichtungssuspension durch Ausblasen mit Preßluft muß allerdings darauf geachtet werden, daß bei diesem Vorgang die mit der feuchten Katalysatormasse verschlossenen Löcher nicht wieder geöffnet werden.

Nach dem Trocknen der Beschichtungssuspension wird sie bei etwa 300 bis 600 °C kalziniert. Danach sind die Löcher mit einer robusten Schicht aus der Katalysatormasse verschlossen, die den rauhen Betriebsbedingungen im Abgasstrang eines Verbrennungsmotors standhält.

Auf diese Weise lassen sich wie bei ungelochten Wabenkörpern je nach angestrebter Beschichtungsdicke Beschichtungskonzentrationen zwischen 50 und 400 Gramm pro Liter Volumen des Wabenkörpers erzielen. Wollte man dieselbe Beschichtungskonzentration ohne Verschließen der Löcher aufbringen, so müßte die Beschichtungsdicke auf den Blechen entsprechend erhöht werden.

Bevorzugt werden für die Herstellung des Wabenkörpers alle Blechlagen, sowohl die glatten als auch die gewellten, in gelochter Form eingesetzt. Die Vorteile der Erfindung werden aber - wenn auch in abgeschwächter Form - auch dann noch verwirklicht, wenn zum Beispiel nur die glatten oder nur die gewellten Blechlagen in gelochter Form eingesetzt werden.

Darüber hinaus kann es zweckmäßig sein, die Lochungen nur auf einen bestimmten Bereich des Wabenkörpers zu beschränken. Vorteilhaft ist es zum Beispiel, die Lochungen nur im Anströmbereich des Wabenkörpers anzubringen.

Die Fläche aller Löcher zusammen relativ zur Gesamtfläche A der Blechlagen im gelochten Bereich bestimmt die erreichbare Verminderung der Wärmekapazität. Erfindungsgemäß liegt die Fläche aller Löcher zur Gesamtfläche im gelochten Bereich des Wabenkörpers zwischen 5 und 80 %. Oberhalb von 80 % wird die Festigkeit des Wabenkörpers durch die Lochungen zu stark beeinträchtigt. Bevorzugt liegt der Lochanteil zwischen 5 und 65, insbesondere zwischen 20 und 65 %.

Zusätzlich zu den Lochungen können die Blechlagen auch Sicken und Prägungen aufweisen, wenn der Abgasstrom zur Verbesserung des Kontaktes mit der katalytischen Beschichtung verwirbelt werden soll.

Als besonders vorteilhaft hat es sich erwiesen, für die Blechlagen zum Aufbau des Wabenkörpers sogenannte Streckmetalle zu verwenden. Als Streckmetall wird ein Metallblech mit Öffnungen, sogenannten Maschen, bezeichnet, die durch versetzte Schnitte bei gleichzeitiger Reckung senkrecht zu den Schnitten ohne Materialverlust erzeugt werden. Das Streckmetall besitzt eine Gitterstruktur mit rhombenförmigen oder schlitzförmigen Maschen. Die Maschen bestehen aus Stegen und der von ihnen, umschlossenen Öffnung. Die Kreuzungspunkte der Stege werden als Knotenpunkte bezeichnet. Die Größe einer Masche ist durch Maschenlänge und Maschenbreite gegeben. Die Maschenlänge ist der Abstand von Mitte Knotenpunkt zu Mitte Knotenpunkt in Richtung der langen Diagonalen. Entsprechendes gilt für die Maschenbreite. Eine weitere Kennzahl für Streckmetalle ist die Breite ihrer Stege.

Bei der Herstellung eines Streckmetalls aus einem Metallblech bleibt die Breite des Metallbleches senkrecht zur Reckrichtung erhalten, denn die Stege werden beim Stanzschnitt gedehnt, da das noch ungestanzte Blech davor sich der Verformung widersetzt. Hierbei bildet sich eine geriffelte, plastisch strukturierte Oberfläche des Streckmetalls aus. Ist eine glatte Oberfläche gewünscht, so kann das Streckmetall nach der Reckung flachgewalzt werden. Ein Streckmetall kann mit einer freien Querschnittsfläche zwischen 4 und etwa 90 % hergestellt werden.

Für den erfindungsgemäßen Katalysator können die glatten oder gewellten Metallbleche oder beide Blechtypen aus einem Streckmetall bestehen. Die Maschenlänge beträgt bevorzugt zwischen 0,5 und 5 mm bei einer Reckung zwischen 5 und 80, bevorzugt zwischen 10 und 50 %. Gute Ergebnisse wurden mit einem Streckmetall mit einer Reckung von 30 % erzielt. Eine Reckung von 30 % bedeutet, daß das Streckmetall nach der Herstellung die 1,3-fache Länge wie das Ausgangsblech besitzt. Ein solches Blech hat also eine freie Lochfläche von etwa 23 % und eine um diesen Prozentsatz verminderte Masse gegenüber einem konventionellen Blech gleicher Länge.

Die geriffelte Oberfläche des Streckmetalls wirkt sich vorteilhaft auf die katalytische Wirkung des fertigen Katalysators aus, da hierdurch das Abgas in den Strömungskanälen des Katalysators verwirbelt und damit der Kontakt zur Katalysatorbeschichtung verbessert wird. Allerdings erhöht sich hierdurch der Abgasgegendruck. Ist dies nicht gewünscht, so können die Streckmetalle vor Bildung des Katalysatorkörpers durch Walzen eingeebnet werden.

Die erfindungsgemäßen Katalysatoren werden für die Abgasreinigung von Verbrennungsmotoren eingesetzt. Die katalytische Beschichtung kann dabei an die spezifischen

Erfordernisse der Abgaszusammensetzung angepaßt werden. Die Beschichtung kann einen Oxidationskatalysator, Dreiweg-Katalysator, Stickoxid-Speicherkatalysator oder SCR-Katalysator enthalten. Der erfindungsgemäße Katalysator kann in Kraftfahrzeugen mit Otto- oder Dieselmotor sowohl als motomaher Startkatalysator oder als Unterbodenkatalysator eingesetzt werden. Der Katalysator ist besonders vorteilhaft für die Abgasreinigung von motorisierten Zweirädern und Wasserfahrzeugen geeignet.

Zur näheren Erläuterung der Erfindung dienen die Figuren 1 bis 7. Es zeigen
- **Figur 1- 4:**: Beispiele von gelochten Blechlagen mit unterschiedlichen Lochformen und Lochanteilen :
**Figur 1:** Löcher mit 0,8 mm Durchmesser
Lochfläche: 50 %
**Figur 2:** Löcher mit 0,8 mm Durchmesser
Lochfläche: 25 %
**Figur 3:** Langlöcher 0,8 x 1,6 mm
Lochfläche: 65 %
**Figur 4:** Langlöcher 0,8 x 2,2 mm
Lochfläche: 40 %
- **Figur 5:**: Beispiel für das verbesserte Anspringen des Katalysators
- **Fie:ur 6**:: Fotografische Aufnahmen eines zur Bildung eines Wabenkörpers ver- wendeten Streckmetalls mit einer Reckung von 30 %
a) im unbeschichteten Zustand
b) nach katalytischer Beschichtung
- **Figgur 7:**: Vergleichsmessung der Abgasemission im europäischen Motorradtest- zyklus mit einem konventionellen Wabenkörper aus ungelochten Blechlagen und einem erfindungsgemäßen Wabenkörper mit aus einem Streckmetall gefertigten Blechlagen

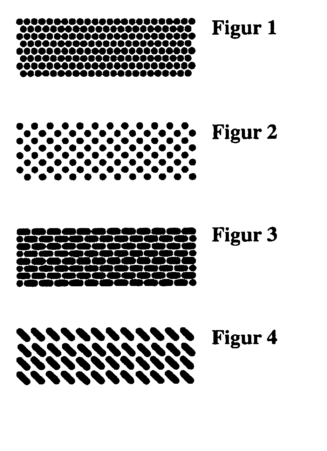

Die Figuren 1 bis 5 zeigen einige Beispiele für mögliche Lochungen der Blechlagen in maßstabsgerechter Darstellung bei zweifacher Vergrößerung.

Die Figuren 1 und 2 zeigen Lochungen aus kreisrunden Löchern mit einem Durchmesser von 0,8 mm. Die Lochungen von Figur 1 und 2 unterscheiden sich durch den Abstand der Löcher voneinander und der dadurch voneinander verschiedenen prozentualen Lochfläche. Gemäß Figur 1 beträgt die Lochfläche 50 % des gelochten Blechbereiches, während gemäß der Lochung von Figur 2 die Lochfläche nur 25 % beträgt.

Die Figuren 3 und 4 zeigen Lochungen mit Langlöchern unterschiedlicher Größe und prozentualer Lochfläche.

### Stmuiationsrechnunsen

Zum Nachweis der Vorteile des erfindungsgemäßen Katalysators wurden Simulationsrechnungen vorgenommen. Als Grundlage für die Simulationen wurden die Abgaswerte, das heißt Schadstoffkonzentrationen und Abgastemperatur, eines Motorrades mit 1200 cm³ Viertaktmotor im EU3-Testzyklus in Abhängigkeit von der Testzeit vermessen.

Für die Berechnung der Schadstoffumsetzung wurden zwei Metallwabenkörper mit einer Zelldichte von 360 cm⁻², einem Durchmesser von 90 mm und einer Länge von 74,5 mm angenommen. Die aus FeCrAlloy bestehenden Metallbleche hatten eine Dicke von 50 µm. Für eine Vergleichsberechnung wurde davon ausgegangen, daß der Wabenkörper aus ungelochten Metallblechen aufgebaut ist, während für die Beispielrechnung angenommen wurde, daß der Wabenkörper gelochte Metallbleche mit einer Lochfläche von 50 % aufweist. Als Katalysatorbeschichtung wurde ein Dreiwegkatalysator mit Platin, Palladium und Rhodium mit einer in beiden Fällen gleichen Edelmetallkonzentration von 1,48 g/l Wabenkörpervolumen angesetzt.

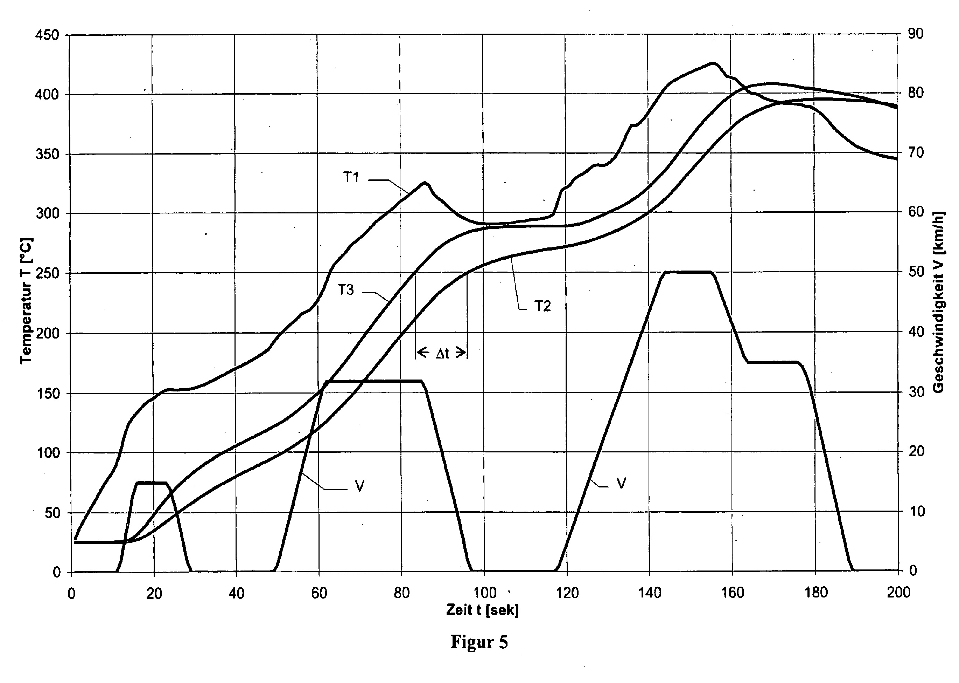

Die Ergebnisse der Messungen und Berechnungen sind in Figur 5 für die ersten 200 Sekunden des EU3-Zyklus dargestellt. "V" bezeichnet den Geschwindigkeitsverlauf des Motorrades gemäß Testzyklus. T1 ist der gemessene Temperaturverlauf des Abgases vor Eintritt in den Katalysator.

Kurve T2 in Figur 5 zeigt den berechneten Temperaturverlauf hinter dem ungelochten Vergleichskatalysator, während Kurve T3 den Temperaturverlauf hinter dem gelochten Beispielkatalysator zeigt. Es ist deutlich zu erkennen, daß infolge der Lochung der Beispielkatalysator sich wesentlich schneller erwärmt. So erreicht der gelochte Katalysator um Δt = 13 s früher eine Temperatur von 250 °C als der ungelochte Vergleichskatalysator.

### Beispiel 1: Vergleichskatalvsator (Katalysator A):

Ein kreiszylindrischer Metallwabenkörper aus ungelochten, 0,05 mm dicken Metallfolien, einem Durchmesser von 90 mm, einer Länge von 74,5 mm und einer Zelldichte von 200 cm⁻² wurde mit einem konventionellen Dreiweg-Katalysator mit Platin, Palladium und Rhodium mit einer Edelmetallkonzentration von 1,55 g/l Wabenkörpervolumen beschichtet.

### Beispiel 2: Erfindungsgemäßer Katalysator (Katalysator B):

Zum Vergleich der katalytischen Eigenschaften wurde ein weiterer Metallträgerkatalysator mit denselben Abmessungen, Foliendicken und derselben Zelldichte wie der Vergleichskatalysator hergestellt. Statt ungelochter Metallfolien wurde jedoch ein Streckmetall mit einer Reckung von 30 % und einer Maschenlänge von 0,6, einer Maschenbreite von 0,5 und einer Stegbreite von 0,18 mm eingesetzt. Der Metallträger wurde mit demselben Dreiweg-Katalysator in gleicher Konzentration wie der Vergleichskatalysator beschichtet.

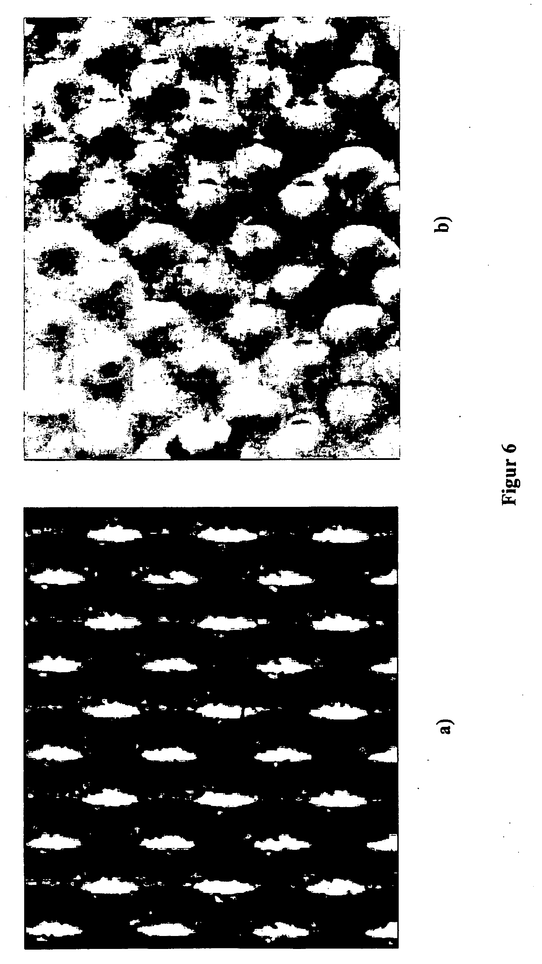

Figur 6 a) zeigt eine fotografische Aufnahme der Struktur des verwendeten Streckmetalls vor der katalytischen Beschichtung. Figur 6 b) zeigt eine entsprechende Aufnahme nach der katalytischen Beschichtung. Es ist deutlich zu erkennen, daß die Maschenöffnungen des Streckmetalls vollständig mit Katalysatormasse ausgefüllt sind. Die Katalysatormasse haftete hervorragend am Streckmetall und zeigte auch bei Anblasen mit Preßluft und Klopfen keine Ablösungen.

### Staudruckmessungen:

Der Staudruck der beiden Metallträgerkatalysatoren wurde vor und nach der katalytischen Beschichtung bei einem Massenstrom von 300 Nm³/h (Nm³ = Norm m³) ermittelt. Die Ergebnisse sind in der folgenden Tabelle 2 wiedergegeben.

**Tabelle 2: Ergebnisse der Staudruckmessungen**

| | Staudruck in mbar bei 300 Nm³/h | | |
|---|---|---|---|
| Katalysator | vor Beschichtung | nach Beschichtung | Anstieg [%] |
| A | 5,9 | 9,4 | 58 |
| B | 8,2 | 10,1 | 22 |

Der erfindungsgemäße Katalysatorträger B zeigt ohne Beschichtung wegen seiner dreidimensional strukturierten Oberfläche einen deutlich höheren Staudruck als der Metallträger mit den ungelochten Metallfolien. Nach dem Aufbringen der Katalysatorbeschichtung erhöht sich der Staudruck des Vergleichskatalysators um 58 % von 5,9 auf 9,4 mbar. Beim erfindungsgemäßen Katalysatorträger aus Streckmetall-Folien erhöht sich der Staudruck nach der Beschichtung nur um 22 % von 8,2 auf 10,1 mbar. Es zeigt sich hier das überraschende Ergebnis, daß durch das Ausfüllen der Maschen des Streckmetalls mit Katalysatormasse die Staudruckdifferenz zwischen beiden Katalysatoren vernachlässigbar wird gegenüber der Staudruckerhöhung zwischen unbeschichtetem und beschichtetem Katalysatorträger.

### Messung der Abgasemissionen im europäischen Motorradtestzyklus:

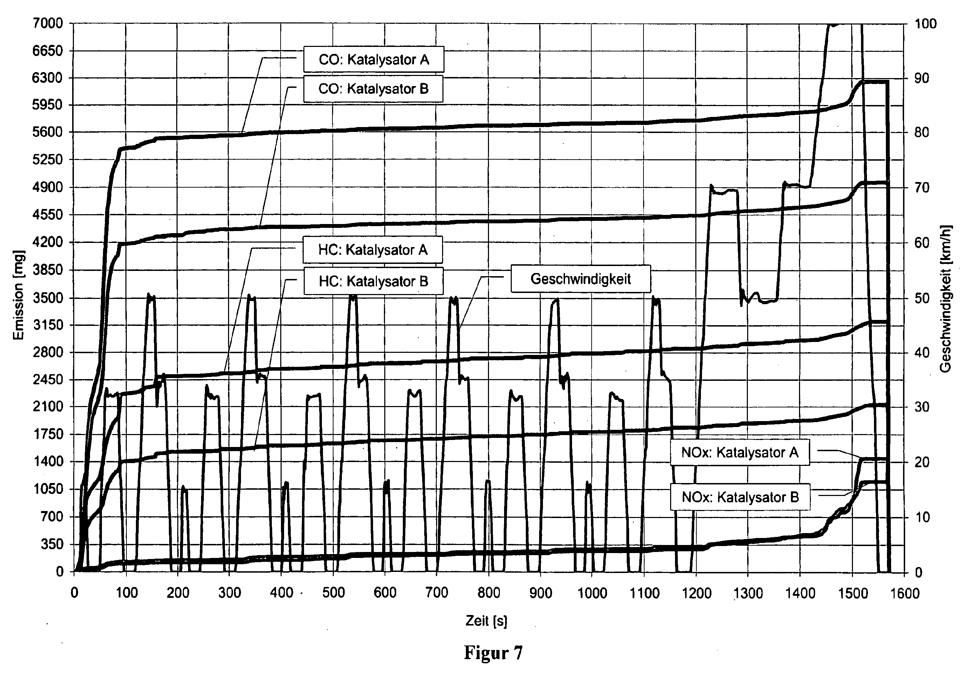

Die Katalysatoren A und B wurden an einem Motorrad bezüglich ihrer Abgasemissionen im europäischen Motorradtestzyklus vermessen. Figur 7 zeigt die während des Test akkumulierten Meßwerte für die CO-, HC- und NOx-Emissionen der beiden Katalysatoren in Abhängigkeit von der Fahrdauer. Figur 7 zeigt auch die vom Motorrad gefahrene Geschwindigkeit. Die Emissionskurven des erfindungsgemäßen Katalysators B für Kohlenmonoxid und Kohlenwasserstoffe liegen deutlich unter den Kurven des Vergleichskatalysators A. Der Unterschied in der Emission zwischen beiden Katalysatoren geht auf die Kaltstartphase während der ersten 100 Sekunden zurück und hat seinen Grund in der kürzeren Anspringzeit des erfindungsgemäßen Katalysators wegen seiner geringeren thermischen Masse. Nach der Kaltstartphase setzen beide Katalysatoren die Schadstoffe gleich gut um, da sie mit der gleichen Menge an Katalysatormasse beschichtet sind. Als Folge davon laufen die Emissionskurven nach der Kaltstartphase parallel zueinander.

In Tabelle 3 sind die Beutelergebnisse für die Schadstoffe während dieses Tests aufgelistet.

**Tabelle 3: Beutelergebnisse des europäischen Motorradzyklus**

| | | Beutelergebnisse | | | |
|---|---|---|---|---|---|
| Katalysator | | CO | THC3^{*)} | NOx | CO₂ |
| A | g/Test | 7,008 | 2,990 | 1,111 | 1764,865 |
| | g/km | 0,549 | 0,234 | 0,087 | 138,204 |
| B | g/Test | 5,673 | 2,043 | 0,895 | 1751,660 |
| | g/km | 0,444 | 0,160 | 0,070 | 137,256 |

| | | | | | |
|---|---|---|---|---|---|
| ^{*)} THC3: total hydrocarbon, berechnet als C3 | | | | | |

Die Ergebnisse von Tabelle 3 zeigen, daß der erfindungsgemäße Katalysator B bezogen auf den Vergleichskatalysator eine um 19 % verringert Emission von Kohlenmonoxid eine um 31 % verringerte Emission von THC3 und eine um 19 % verringerte Emission von Stickoxiden zeigt.

## Patentansprüche

1. Katalysator für die Reinigung der Abgase von Verbrennungsmotoren enthaltend einen Wabenkörper aus glatten und gewellten Metallblechen mit einer Eintrittsstimfläche und einer Austrittstimfläche für die Abgase, wobei die Metallbleche zur Verminderung ihrer Wärmekapazität mit Löchern versehen sind und auf den Metallblechen eine Katalysatormasse aufgebracht ist, wobei die Löcher der Metallbleche mit Katalysatormasse ausgefüllt sind,
**dadurch gekennzeichnet,**
**daß** die Lochfläche aller Löcher zusammen 5 bis 80 % der Fläche der Metallbleche beträgt.

2. Katalysator nach Anspruch 1,
**dadurch gekennzeichnet,**
**daß** die Löcher einen runden, elliptischen, ovalen, quadratischen, rechteckigen, schlitzförmigen oder vieleckigen Querschnitt haben.

3. Katalysator nach Anspruch 2,
**dadurch gekennzeichnet,**
**daß** die Löcher eine Fläche zwischen 0,1 mm² bis 25 mm² aufweisen.

4. Katalysator nach Anspruch 3,
**dadurch gekennzeichnet,**
**daß** die Löcher auf der gesamten Oberfläche oder auf einer Teilfläche der Metallbleche angebracht sind.

5. Katalysator nach Anspruch 1,
**dadurch gekennzeichnet,**
**daß** die glatten oder die gewellten Metallbleche oder beide Metallbleche aus einem Streckmetall gebildet sind, welches eine Gitterstruktur mit rhombenförmigen oder schlitzförmigen Maschen aufweist und wobei die Maschen aus Stegen und einer von ihnen umschlossenen Öffnung bestehen und die Kreuzungspunkte der Stege als Knotenpunkte bezeichnet werden.

6. Katalysator nach Anspruch 5,
**dadurch gekennzeichnet,**
**daß** das Streckmetall eine Maschenlänge von Knotenmitte zu Knotenmitte zwischen 0,5 und 5 mm aufweist bei einer Reckung zwischen 5 und 80 %.

7. Katalysator nach einem der Ansprüche 5 oder 6,
**dadurch gekennzeichnet,**
**daß** die Maschen des Streckmetalls auf der gesamten Oberfläche oder auf einer Teilfläche des Streckmetalls angebracht sind.

8. Katalysator nach Anspruch 1,
**dadurch gekennzeichnet,**
**daß** er eine Beladung mit Katalysatormasse in einer Konzentration zwischen 50 und 400 g/l Volumen des Wabenkörpers aufweist.

9. Verwendung des Katalysators nach einem der vorstehenden Ansprüche für die Abgasreinigung von Verbrennungsmotoren.

10. Verwendung nach Anspruch 9 ,
**dadurch gekennzeichnet,**
**daß** der Katalysator als Startkatalysator oder als Unterbodenkatalysator an Kraftfahrzeugen eingesetzt wird.

11. Verwendung nach Anspruch 9,
**dadurch gekennzeichnet,**
**daß** der Katalysator zur Abgasreinigung von motorisierten Zweirädern oder motorisierten Wasserfahrzeugen eingesetzt wird.

## Claims

1. Catalyst for the cleaning of the exhaust gases of internal combustion engines, comprising a honeycomb composed of smooth and corrugated metal sheets with an entrance end face and an exit end face for the exhaust gases, the metal sheets being provided with holes to reduce their heat capacity and a catalyst material having been applied to the metal sheets, the holes of the metal sheets being filled with catalyst material,
**characterized in that**
the hole area of all holes together is 5 to 80% of the area of the metal sheets.

2. Catalyst according to Claim 1,
**characterized in that**
the holes have a round, elliptical, oval, square, rectangular, slot-shaped or polygonal cross section.

3. Catalyst according to Claim 2,
**characterized in that**
the holes have an area between 0.1 mm² and 25 mm².

4. Catalyst according to Claim 3,
**characterized in that**
the holes are positioned over the entire surface or over part of the surface of the metal sheets.

5. Catalyst according to Claim 1,
**characterized in that**
the smooth or the corrugated metal sheets or both metal sheets are formed from expanded metal which has a lattice structure with rhombus-shaped or slot-shaped meshes, and the meshes consisting of strands and an orifice enclosed by them and the crossing points of the strands being referred to as node points.

6. Catalyst according to Claim 5,
**characterized in that**
the expanded metal has a mesh length from node center to node center between 0.5 and 5 mm at an elongation between 5 and 80%.

7. Catalyst according to Claim 5 or 6,
**characterized in that**
the mesh of the expanded metal is positioned over the entire surface or over part of the surface of the expanded metal.

8. Catalyst according to Claim 1,
**characterized in that**
it has a loading with catalyst material in a concentration between 50 and 400 g/l of volume of the honeycomb.

9. Use of the catalyst according to one of the preceding claims for exhaust gas cleaning of internal combustion engines.

10. Use according to Claim 9,
**characterized in that**
the catalyst is used as a starting catalyst or as an underfloor catalyst in motor vehicles.

11. Use according to Claim 9,
**characterized in that**
the catalyst is used for exhaust gas cleaning of motorized bicycles or motorized water vehicles.

## Revendications

1. Catalyseur d'épuration des gaz d'échappement de moteurs à combustion interne, contenant un corps en nid d'abeilles constitué d'une tôle métallique lisse et d'une tôle métallique ondulée et présentant une surface frontale d'entrée ainsi qu'une surface frontale de sortie des gaz d'échappement, les tôles métalliques étant perforées pour diminuer leur capacité calorifique et une pâte de catalyseur étant appliquée sur les tôles métalliques, les perforations ménagées dans les tôles métalliques étant remplies de la pâte de catalyseur, **caractérisé en ce que**
la surface de toutes les perforations représente globalement de 5 à 8,0 % de la surface de la tôle métallique.

2. Catalyseur selon la revendication 1, **caractérisé en ce que** les perforations ont une section transversale circulaire, elliptique, ovale, carrée, rectangulaire, en fente ou en polygone.

3. Catalyseur selon la revendication 2, **caractérisé en ce que** la superficie des perforations est comprise entre 0,1 mm² et 25 mm².

4. Catalyseur selon la revendication 3, **caractérisé en ce que** les perforations sont ménagées sur la totalité de la surface ou sur une partie de la surface de la tôle métallique.

5. Catalyseur selon la revendication 1, **caractérisé en ce que** la tôle métallique lisse, la tôle métallique ondulée ou les deux tôles métalliques sont formées d'un métal déployé qui présente une structure de grille dont les mailles ont la forme d'un losange ou d'une fente, les mailles étant constituées d'entretoises entourant une ouverture, les points de croisement des entretoises étant appelés points de noeud.

6. Catalyseur selon la revendication 5, **caractérisé en ce que** le métal déployé présente des mailles dont la longueur entre les milieux de noeuds est comprise entre 0,5 et 5 mm avec un étirage comprise entre 5 et 80 %.

7. Catalyseur selon l'une des revendications 5 ou 6, **caractérisé en ce que** les mailles du métal déployé sont appliquées sur la totalité de la surface ou sur une partie de la surface du métal déployé.

8. Catalyseur selon la revendication 1, **caractérisé en ce que** la concentration de la charge de pâte de catalyseur est comprise entre 50 et 400 g/l de volume du corps en nid d'abeilles.

9. Utilisation du catalyseur selon l'une des revendications précédentes pour l'épuration des gaz d'échappement de moteurs à combustion interne.

10. Utilisation selon la revendication 9, **caractérisée en ce que** le catalyseur est utilisé comme catalyseur de démarrage ou comme catalyseur sous plancher de véhicules automobiles.

11. Utilisation selon la revendication 9, **caractérisée en ce que** le catalyseur est utilisé pour épurer les gaz d'échappement de deux-roues motorisés ou de navires à moteur.
